# EUROPÄISCHE PATENTSCHRIFT

(11) **EP 3 523 187 B1**
(45) Veröffentlichungstag und Bekanntmachung des Hinweises auf die Patenterteilung: **23.12.2020**
(21) Anmeldenummer: 17777505.3
(22) Anmeldetag: 18.09.2017
(51) Int. Cl.: B62J 17/06, B62K 19/46, B62K 11/00

(54) **MOTORROLLER MIT IN DEN BEINSCHUTZ INTEGRIERTEM STAUFACH**
MOTOR SCOOTER HAVING A STORAGE COMPARTMENT INTEGRATED IN THE LEG SHIELD
SCOOTER COMPRENANT UN COMPARTIMENT DE RANGEMENT INTÉGRÉ AU PROTÈGE-JAMBES

(30) Priorität: 10.10.2016 DE 102016219608
(43) Veröffentlichungstag der Anmeldung: 14.08.2019
(73) Patentinhaber: Bayerische Motoren Werke Aktiengesellschaft, 80809 München (DE)
(72) Erfinder: DRESSLER, Matthias, 80993 Muenchen (DE)
(86) Internationale Anmeldenummer: PCT/EP2017/073383
(87) Internationale Veröffentlichungsnummer: WO 2018/068987

(56) Entgegenhaltungen:
- EP-A2- 1 607 318
- JP-A- 2007 269 263
- JP-A- 2008 195 173
- JP-U- S53 110 654

## Beschreibung

Die Erfindung betrifft einen Motorroller (auch Scooter genannt) gemäß dem Oberbegriff des Anspruchs 1, insbesondere einen Motorroller mit einem eine Lenksäule verkleidenden Beinschutz und einem in den Beinschutz integrierten Staufach.

Üblicherweise weisen Motorroller zwischen dem Beinschutz um die Lenksäule und der Sitzbank einen als Durchstieg bezeichneten Freiraum auf, der das Aufsitzen auf das Fahrzeug erleichtert. Am Beinschutz ist gewöhnlich ein kleines Staufach vorgesehen.

Da Motorroller viel im Stadtverkehr verwendet werden und dementsprechend das Transportieren von Einkäufen oder anderem Gepäck zur täglichen Benutzung dazugehört, ist viel Stauraum am Fahrzeug ein wünschenswertes Kriterium. Der bauartbedingt zur Verfügung stehende Stauraum ist jedoch begrenzt. Gleichzeitig sollten auch die Optik sowie natürlich auch die Ergonomie des Fahrzeugs durch das Hinzufügen von Staumöglichkeiten nicht beeinträchtigt werden.

Die JP 2008-195173 A zeigt ein Staufach, dessen Klappe über flexible Seitenteile mit dem Beinschutz verbunden ist, sodass ein erweiterter Stauraum genutzt werden kann.

In der JP S53 110654 U ist eine Tasche mit einem Deckel gezeigt, die im Durchstieg befestigt werden kann.

Aufgabe der Erfindung ist es, auf einfache Weise das Stauvolumen eines Motorrollers zu erweitern, ohne permanent das Erscheinungsbild des Fahrzeugs zu verändern.

Diese Aufgabe wird mit einem Motorroller mit den Merkmalen des Anspruchs 1 gelöst

Durch die flexiblen Elemente lässt sich das Stauvolumen bei Bedarf erweitern. Hierzu wird die Verschlussplatte vom Beinschutz weggezogen, bis die beiden seitlichen flexiblen Elemente gestrafft sind, und der Raum zwischen der Verschlussplatte, dem Beinschutz und den seitlichen flexiblen Elementen kann als Stauraum genutzt werden.

Wird das erweiterte Stauvolumen nicht mehr benötigt, verschwinden die flexiblen Elemente hinter der Verschlussplatte, die bündig mit den sie umgebenden Abschnitten des Beinschlusses abschließt, ohne das ursprüngliche Design des Fahrzeugs zu verändern.

Das Stauvolumen kann wie bekannt einen Hohlraum umfassen, der sich in das Innere des Beinschutzes hinein erstreckt und der das normale Stauvolumen des Staufachs bildet. Im verschlossenen Zustand des Staufachs ist der Hohlraum durch die am Beinschutz anliegende Verschlussplatte verschlossen, während durch Wegklappen der Verschlussplatte, beispielsweise um Scharniere im Bereich deren unteren Randes, der Hohlraum zugänglich ist.

Soll das erweiterte Stauvolumen genutzt werden, wird in diesem Fall die Verschlussplatte weiter vom Beinschutz wegbewegt als beim normalen Aufklappen. Insbesondere kann die Verschlussplatte soweit vom Beinschutz wegbewegt werden, bis die seitlichen flexiblen Elemente gestrafft sind. Beim normalen Aufklappen der Verschlussplatte, um das normale Stauvolumen des Hohlraums zugänglich zu machen, können dagegen die flexiblen Elemente zusammengelegt im Hohlraum verbleiben.

Der Hohlraum ist vorzugsweise nach außen durch eine Staufachöffnung mit einem umlaufenden Rand begrenzt, die im verschlossenen Zustand durch die Verschlussplatte abgedeckt ist. Der Rand der Öffnung umfasst einen oberen, einen unteren und zwei seitliche Abschnitte, wobei die flexiblen Elemente vorzugsweise im Bereich der seitlichen Abschnitte mit dem Beinschutz verbunden sind, sodass der Hohlraum im Wesentlichen ohne Unterbrechung seiner seitlichen Begrenzungen in das erweiterte Stauvolumen übergeht.

Es ist auch möglich, unter der Verschlussplatte keinen Hohlraum vorzusehen, sodass im Wesentlichen zwischen der Verschlussplatte und dem Beinschutz im verschlossenen Zustand nur genug Platz bleibt, um die flexiblen Elemente aufzunehmen.

Zusätzlich zu den beiden seitlichen flexiblen Elementen ist ein unteres flexibles Element vorgesehen, das am unteren Rand der Verschlussplatte angebracht ist und das mit dem Beinschutz verbunden ist. Die Verbindung mit dem Beinschutz erfolgt insbesondere im Bereich des unteren Abschnitts des Randes der Öffnung bzw. einem unteren Abschnitt des von der Verschlussplatte im verschlossenen Zustand überdeckten Bereichs. Die drei flexiblen Elemente bilden vorzugsweise ein durchgehendes flexibles Band, das an drei Seiten der Verschlussplatte fixiert ist, wobei die drei flexiblen Elemente Begrenzungen für das erweiterte Stauvolumen bilden.

Um die Verschlussplatte vom Beinschutz lösen zu können, sodass das erweiterte Stauvolumen nutzbar wird, ist eine Verschlussmechanik vorgesehen, die die Verschlussplatte reversibel lösbar mit dem Beinschutz verbindet. Beispielsweise kann die Verschlussmechanik ein bekanntes Schloss umfassen, über das die Verschlussplatte am Beinschutz gesichert werden kann. Es ist auch möglich, Befestigungselemente, z.B. Rastelemente, einzusetzen, die vom Beinschutz gelöst werden, wenn das erweiterte Stauvolumen genutzt werden soll. So können Rastelemente im Bereich der Seitenränder, des unteren Randes und/oder des oberen Randes vorgesehen sein, die mit entsprechenden Gegenstücken am Beinschutz verrasten. Insbesondere im Bereich des oberen Randes kann auch ein Magnetverschluss vorgesehen sein.

Im Bereich des unteren Randes ist eine aushängbare Kulissenführung ausgebildet, die zulässt, dass die Verschlussplatte um einen gewissen ersten Winkel um ihren unteren Rand verschwenkt wird und dann, gegebenenfalls nachdem sie um einen zweiten, größeren Winkel verschwenkt wurde, vom Beinschutz abgehoben werden kann.

Bereits beim Verschwenken der Verschlussplatte um ihren unteren Rand können sich die flexiblen Elemente zwischen Verschlussplatte und Beinschutz erstrecken und zumindest einen Teil des erweiterten Stauvolumens bilden.

Wird die Verschlussplatte komplett vom Beinschutz gelöst, ist also auch untere Rand der Verschlussplatte im geöffneten Zustand des Staufachs vom Beinschutz beabstandet, kann sie im Wesentlichen parallel zu ihrer Ausrichtung im verschlossenen Zustand des Staufachs in den Durchstieg hinein verschoben werden, bis die flexiblen Elemente gestrafft sind.

In diesem Fall ist vorzugsweise eine Halterung im Bereich des Durchstiegs vorgesehen, an der die Verschlussplatte fixiert werden kann, um die Verschlussplatte zu stabilisieren. Die Halterung kann z.B. an einem Tankdeckel am Boden des Durchstiegs oder in einem unteren Bereich der Sitzbank, z.B. einem Sitzbankscharnier, angeordnet sein.

Vorzugsweise ist die Halterung so ausgebildet, dass die Verschlussplatte einfach in diese eingesteckt werden kann. Eine lösbare Verrastung an der Halterung ist natürlich auch denkbar.

In einer bevorzugten Ausführungsform ist das Staufach so ausgelegt, dass die Verschlussplatte bis zu einem ersten Winkel aufklappbar ist, um das normale Volumen des Staufachs zugänglich zu machen und im geöffneten Zustand in einem zweiten, größeren Winkel aufklappbar ist, um wenigstens einen Teil des erweiterten Volumens zugänglich zu machen.

Außerdem kann der untere Rand der Verschlussklappe im geöffneten Zustand komplett vom Beinschutz gelöst werden, um das vollständige erweiterte Stauvolumen zu bilden.

Das Staufach lässt sich mit drei unterschiedlichen Volumina nutzen. Wird die Verschlussklappe normal im ersten Winkel geöffnet, ist lediglich das erste Volumen des Staufachs, also der Hohlraum im Inneren des Beinschutzes zugänglich. Wird die Verschlussklappe bis zum zweiten, größeren Winkel geöffnet, strecken sich die seitlichen flexiblen Elemente, sodass auch Stauraum zwischen dem Beinschutz und der Verschlussplatte im Bereich der flexiblen seitlichen Elemente nutzbar ist und ein Teil des erweiterten Stauvolumens zur Verfügung steht. In einem dritten Schritt wird die Verschlussplatte komplett vom Beinschutz gelöst und parallel zum Beinschutz verschoben, bis sich die beiden seitlichen flexiblen Elemente und das untere flexible Element gestrafft haben. Jetzt steht das vollständige erweiterte Stauvolumen zur Nutzung zur Verfügung.

Die Verschlussmechanik umfasst beispielsweise seitliche Befestigungselemente, die insbesondere Rastelemente sein können, an den Seitenrändern der Verschlussplatte. Die Verschlussmechanik umfasst untere Befestigungselemente im Bereich des unteren Randes der Verschlussplatte, die durch eine aushängbare Kulissenführung gebildet sind. Beim Öffnen bis zum zweiten Winkel werden lediglich die seitlichen Befestigungselemente gelöst (diese können allerdings auch weggelassen werden). Erst beim vollständigen Abheben der Verschlussplatte vom Beinschutz werden die unteren Befestigungselemente vom Beinschutz getrennt.

Wird das erweiterte Stauvolumen nicht mehr benötigt, so wird die Verschlussplatte wieder am Beinschutz fixiert, indem das Schloss verriegelt wird oder die Befestigungselemente mit entsprechenden Gegenstücken am Beinschutz in Verbindung kommen. Die flexiblen Elemente werden dabei zusammengelegt und in den Hohlraum bzw. den Bereich unterhalb der Verschlussplatte verlagert.

Die Verschlussplatte ist vorzugsweise starr. Die flexiblen Elemente hingegen können im Wesentlichen aus einem Gewebe bestehen.

Bevorzugt ist außerdem ein flexibles Deckelelement vorgesehen, das sich im geöffneten Zustand des Staufachs zwischen dem oberen Rand der Öffnung und dem oberen Rand der Verschlussplatte erstreckt, und das eine optionale Abdeckung des ansonsten nach oben offenen erweiterten Stauvolumens bildet. Das flexible Deckelelement kann beispielsweise am Beinschutz permanent befestigt sein, und lösbar am oberen Rand der Verschlussplatte fixiert werden, wenn das erweiterte Staufachvolumen abgedeckt werden soll. Eine umgekehrte Anordnung ist natürlich auch möglich.

Das flexible Deckelelement kann beispielsweise einen oder mehrere Reißverschlüsse aufweisen, mit denen es zumindest an den beiden seitlichen flexiblen Elementen, gegebenenfalls auch an Reißverschlusssegmenten am oberen Rand der Verschlussplatte sowie am oberen Rand der Öffnung des Staufachhohlraums fixiert werden kann.

Die Erfindung schafft ein flexibles Stausystem, mit dem bei Bedarf ein erweitertes Stauraumvolumen geschaffen werden kann, das, wenn es nicht benötigt wird, hinter der Verschlussplatte verschwindet.

Die Erfindung wird nachfolgend anhand eines Ausführungsbeispiels und mit Bezug auf die beigefügten Zeichnungen näher beschrieben. In den Zeichnungen zeigen:
- Figur 1 eine schematische perspektivische Darstellung eines erfindungsgemäßen Motorrollers gemäß einer ersten Variante, bei dem das Staufach und die Verschlussplatte sich im verschlossenen Zustand befinden;
- Figur 2 den Motorroller aus Figur 1 in einer seitlichen Ansicht;
- Figur 3 den Motorroller aus Figur 1, in einer seitlichen Ansicht, wobei sich die Verschlussplatte und das Staufach im geöffneten Zustand befinden; mit geöffnetem Staufach;
- Figur 4 den Motorroller nach Anspruch 3 in einer perspektivischen Darstellung;
- Figur 5 eine schematische perspektivische Darstellung eines erfindungsgemäßen Motorrollers gemäß einer zweiten Variante, bei dem das Staufach und die Verschlussplatte sich im verschlossenen Zustand befinden;
- Figur 6 den Motorroller aus Figur 5, bei dem die Verschlussklappe um einen ersten Winkel geöffnet ist; und
- Figur 7 den Motorroller aus Figur 5, bei dem sich die Verschlussplatte und das Staufach im geöffneten Zustand befinden.

Die Figuren zeigen jeweils den Durchstiegsbereich eines Motorrollers 10, bei dem ein Beinschutz 12, der eine Lenksäule verkleidet, sowie eine Sitzbank 14 durch einen Durchstieg 16 getrennt sind.

In dem der Sitzbank 14 zugewandten Abschnitt des Beinschutzes 12 ist ein Staufach 18 vorgesehen. In einem verschlossenen Zustand ist das Staufach 18 durch eine Verschlussplatte 20 verschlossen, die bündig mit einer Außenoberfläche des Beinschutzes 12 abschließt.

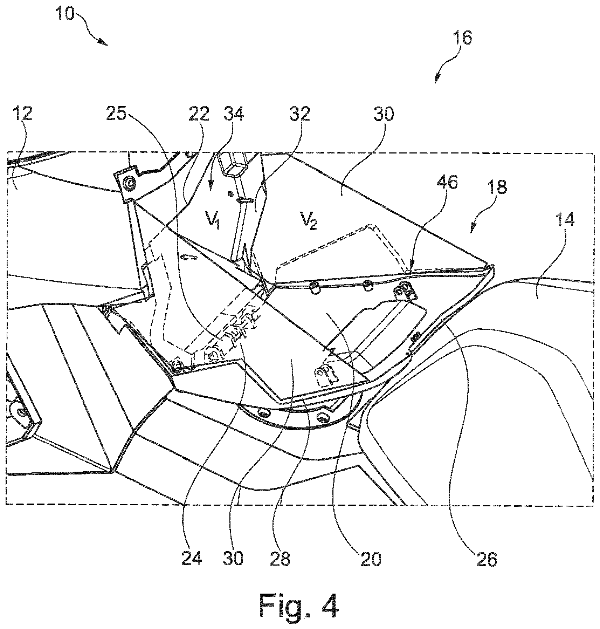

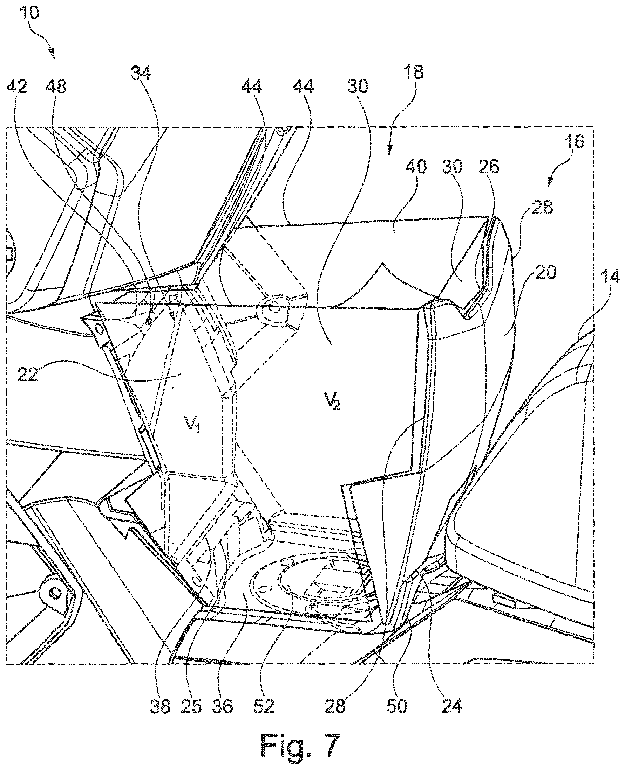

Im Inneren des Beinschutzes 12 ist optional ein Hohlraum 22 ausgebildet, der ein normales Stauvolumen V₁ des Staufaches 18 bildet. Das normale Stauvolumen V₁ ist zugänglich, indem die Verschlussplatte 20 um den Bereich ihres unteren Randes 24 verschwenkt wird, sodass ihr oberer Rand 26 sich vom Beinschutz 12 beanstandet. Hierzu sind im Bereich des unteren Randes 24 nicht näher dargestellte, bekannte Scharniere 25 (siehe Fign. 4 und 7) vorgesehen. Der Hohlraum 22 könnte auch entfallen, sodass im verschlossenen Zustand die Verschlussplatte im Wesentlichen direkt über dem Beinschutz 12 liegt.

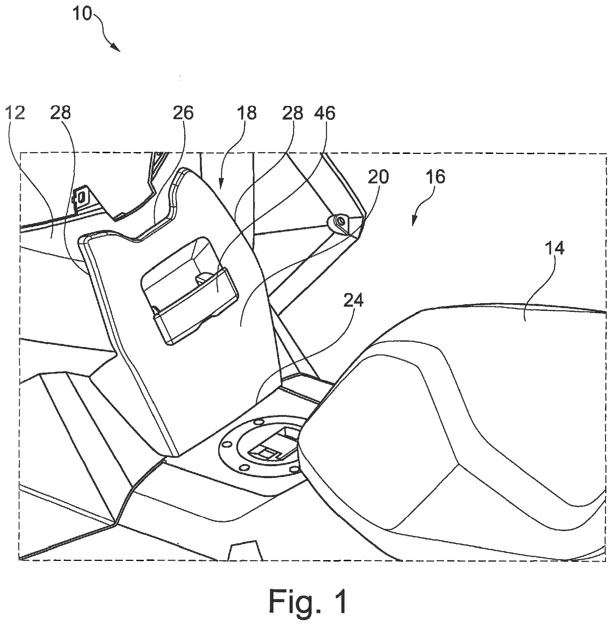

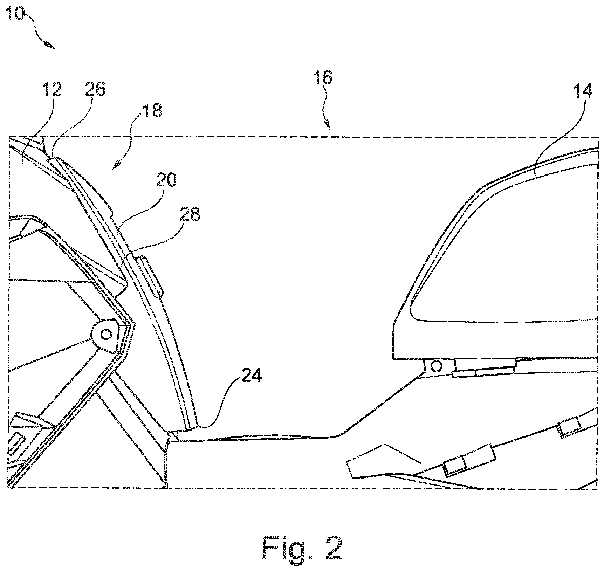

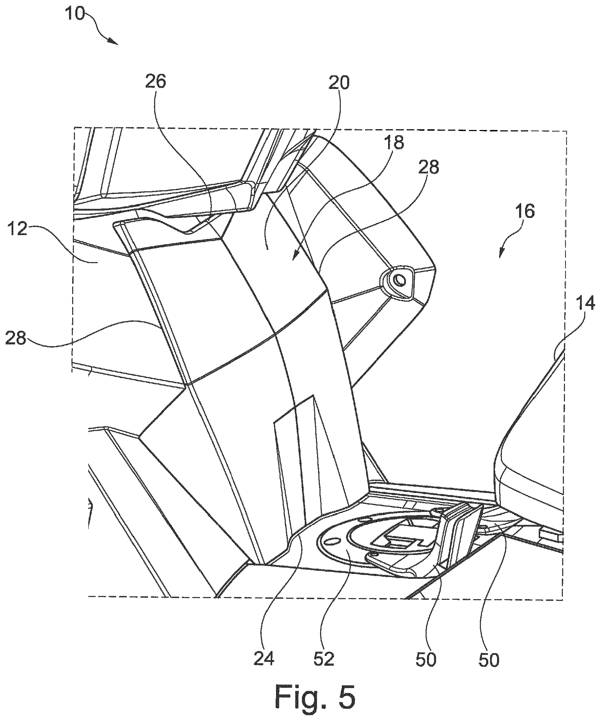

Die Figuren 1 bis 4 zeigen eine erste Variante, während die Figuren 5 bis 7 eine zweite Variante darstellen.

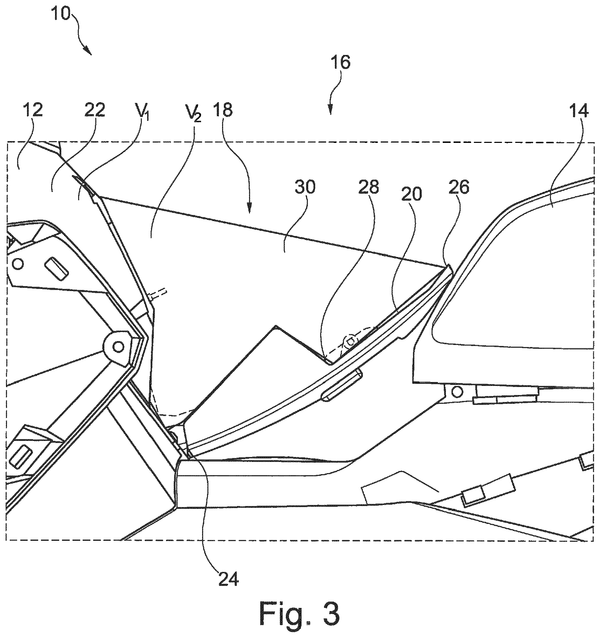

In beiden Varianten ist an den beiden gegenüberliegenden Seitenrändern 28 der Verschlussplatte 20 jeweils ein seitliches flexibles Element 30 vorgesehen (siehe z.B. Figur 3 und Figur 7), das im Wesentlichen über die gesamte Länge des Seitenrandes 28 fest mit der Verschlussplatte 20 verbunden ist. Der gegenüberliegende Rand der seitlichen flexiblen Elemente 30 ist jeweils fest mit dem Beinschutz 12 verbunden. Die Verbindung liegt in einem Bereich, der im verschlossenen Zustand von der Verschlussplatte abgedeckt ist. In diesem Beispiel sind die seitlichen flexiblen Elemente im Bereich von seitlichen Abschnitten 32 eines Randes einer Staufachöffnung 34 fixiert, die den Hohlraum 22 nach außen begrenzt.

In der ersten Variante bleibt der untere Rand 24 der Verschlussplatte über das Scharnier 25 am Beinschutz 12 fixiert, wobei die Verschlussplatte 20 um das Scharnier 25 schwenken kann.

Das Scharnier 25 ist hier so ausgelegt, dass die Verschlussplatte 20 bis zu einem ersten Winkel aufschwenken kann, um das erste Volumen V₁ im Hohlraum 22 zugänglich zu machen. Ein weiteres Verschwenken wird in einer möglichen Variante durch einen Anschlag begrenzt (nicht dargestellt).

Der Anschlag durch Aufbringung einer Zugkraft zerstörungsfrei überwunden werden, wodurch sich die Verschlussplatte 20 bis zu einem zweiten, größeren Winkel aufklappen lässt. Hierbei entfalten sich die flexiblen Elemente 30, 36 zumindest zum Teil, sodass das ein erweitertes Stauvolumen V₂, das zwischen dem Beinschutz 12, der Verschlussplatte 20 und den seitlichen flexiblen Elementen 30 gebildet ist, zumindest teilweise nutzbar wird.

Das Scharnier ist beispielsweise als Kulissenführung ausgebildet, in der auch der Anschlag verwirklicht sein kann.

Im zweiten Öffnungswinkel liegt die Verschlussplatte 20 hier an der Sitzbank 14 an, wodurch sie in ihrer Position stabilisiert wird.

In der zweiten Variante ist die Verschlussplatte 20 so ausgelegt, dass auch ihr unterer Rand 24 vom Beinschutz gelöst werden kann (siehe Figur 7).

Hier ist außerdem ist ein unteres flexibles Element 36 vorgesehen, das zum einen am unteren Rand 24 der Verschlussplatte 20 und zum anderen an einem unteren Abschnitt 38 des Rands der Staufachöffnung 34 befestigt ist.

Die drei flexiblen Elemente 30, 36 sind an ihren aneinandergrenzenden Rändern fest miteinander verbunden, beispielsweise vernäht.

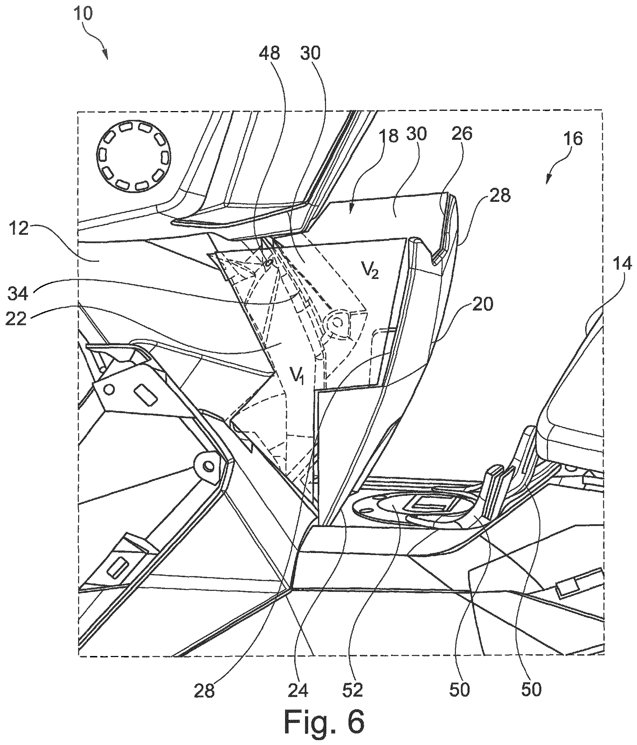

Nachdem die Verschlussplatte 20 vom Beinschutz 12 gelöst wurde, kann sie in Richtung zur Sitzbank 14 verschoben werden (siehe Figuren 6 und 7), bis die flexiblen Elemente 30, 36 gestrafft sind.

Die Innenseite der Verschlussplatte 20 sowie die flexiblen Elemente 30, 36 begrenzen dabei wie in der ersten Ausführungsform ein erweitertes Stauvolumen V₂, das hier in den Hohlraum 22 übergeht.

Außerdem ist in beiden Varianten optional ein flexibles Deckelteil 40 vorgesehen, das am oberen Rand 26 der Verschlussplatte 20, einem oberen Abschnitt 42 des Randes der Staufachöffnung 34 sowie an den oberen Rändern 44 der beiden seitlichen flexiblen Elemente 30 befestigt ist, beispielsweise durch einen oder mehrere Reißverschlüsse. Das flexible Deckelteil 40 ist an zumindest einer Stelle, entweder am oberen Rand 26 der Verschlussplatte 20 oder am oberen Abschnitt 42 des Randes der Staufachöffnung 34 fest befestigt, sodass es nicht verloren gehen kann. Ist die Reißverschlussverbindung geschlossen, so ist das zweite Volumen V₂ vollständig von den flexiblen Elementen 30, 36, der Verschlussplatte 20, dem Beinschutz 12 sowie dem flexiblen Deckelteil 40 umgeben.

Wird das erweiterte Stauvolumen V₂ nicht mehr benötigt, so wird die Verschlussplatte 20 zurück auf den Beinschutz 12 aufgesetzt, wobei die flexiblen Elemente 30, 36 sowie das flexible Deckelteil 40 unterhalb der Verschlussplatte 20 und in diesem Beispiel im Inneren des Hohlraums 22 verschwinden.

Die Verschlussplatte 20 ist mit dem Beinschutz 12 über eine Verschlussmechanik 46 verbunden, über die die Verschlussplatte 20 reversibel gelöst und wieder am Beinschutz 12 fixiert werden kann.

Im hier gezeigten Beispiel ist die Verschlussmechanik 46 im Wesentlichen durch ein Schloss an der Verschlussplatte 20 sowie das Scharnier 25 gebildet.

Die Kulissenführung ist hier aushängbar konfiguriert, sodass die Verschlussplatte 20 reversibel vom Beinschutz 12 gelöst und wieder mit diesem verbunden werden kann. Gegebenenfalls ist die Verschlussplatte 20 erst aushängbar, wenn sie bis zum zweiten Winkel aufgeklappt ist.

Es könnten auch beispielsweise Rastelemente entlang der Seitenränder 28 der Verschlussplatte 20 vorgesehen sein. Diese Variante wird beispielsweise verwendet, wenn der Beinschutz 12 keinen Hohlraum 22 aufweist.

Optional wird der obere Rand 26 der Verschlussplatte 20 durch einen Magnetverschluss 48 am Beinschutz 12 gehalten (angedeutet in den Figuren 6 und 7).

In diesem Beispiel ist eine Halterung 50 vorgesehen, an der der untere Rand 24 der Verschlussplatte 20 fixiert werden kann, z.B. durch einfaches Einstecken in die Halterung 50.

Die Halterung 50 ist beispielsweise im Bereich eines Tankdeckels 52 angeordnet, z.B. analog zu einer bekannten Befestigung eines Tankrucksacks. Alternativ kann die Halterung 50 im unteren Bereich der Sitzbank 14 vorgesehen sein, beispielsweise an einem Sitzbankscharnier.

Die beiden gezeigten Varianten können in einer Ausführungsform kombiniert werden. In diesem Fall kann die Verschlussplatte 20 bis zu einem ersten Winkel aufgeklappt werden, um das Volumen V₁ des Hohlraums 22 zugänglich zu machen (siehe Figur 6). Die Verschlussplatte 20 kann, nach Überwindung eines Widerstands, bis zu einem zweiten, größeren Winkel aufgeklappt werden (siehe Figur 4). Wird ein noch größeres Stauvolumen benötigt, kann die Verschlussplatte 20 an unteren Rand 24 ausgehängt und in die Halterung 50 eingesteckt werden (Figur 7), sodass das komplette erweiterte Stauvolumen V₂ genutzt werden kann.

## Patentansprüche

1. Motorroller (10) mit einem eine Lenksäule verkleidenden Beinschutz (12) und einem in den Beinschutz (12) integrierten Staufach (18), das im verschlossenen Zustand durch eine bündig mit einer Außenoberfläche des Beinschutzes (12) abschließende Verschlussplatte (20) verschlossen ist, wobei die Verschlussplatte (20) einen oberen Rand (26), einen unteren Rand (24) sowie zwei Seitenränder (28) aufweist und an den Seitenrändern (28) der Verschlussplatte (20) jeweils ein seitliches flexibles Element (30) angebracht ist, das in einem im verschlossenen Zustand unter der Verschlussplatte (20) liegenden Bereich mit dem Beinschutz (12) fest verbunden ist, und wobei die Verschlussplatte (20) in einem geöffneten Zustand wenigstens an ihrem oberen Rand (26) und ihren Seitenrändern (28) vom Beinschutz (12) beabstandet ist, sodass zwischen der Verschlussplatte (20), dem Beinschutz (12) und den flexiblen Elementen (30) ein erweitertes Stauvolumen (V₂) des Staufachs (18) gebildet ist, wobei die Verschlussplatte (20) bis zu einem ersten Winkel aufklappbar ist, um ein normales Volumen (V₁) des Staufachs (18) zugänglich zu machen und bis zu einem zweiten, größeren Winkel aufklappbar ist, sodass zwischen der Verschlussplatte (20), dem Beinschutz (12) und den seitlichen flexiblen Elementen (30) ein Teil des erweiterten Stauvolumens (V₂) des Staufachs (18) zur Verfügung steht, wobei der untere Rand (24) der Verschlussplatte (20) im geöffneten Zustand komplett vom Beinschutz (12) beabstandbar und parallel zum Beinschutz (12) verschiebbar ist, bis sich die beiden seitlichen flexiblen Elemente (30) und ein unteres flexibles Element (36) gestrafft haben, sodass das vollständige erweiterte Stauvolumen (V₂) zur Nutzung zur Verfügung steht, wobei eine Verschlussmechanik (46) vorgesehen ist, über die die Verschlussplatte (20) lösbar mit dem Beinschutz (12) verbunden ist, die untere Befestigungselemente im Bereich des unteren Rands (24) der Verschlussplatte (20) umfasst, **dadurch gekennzeichnet, dass** die untere Befestigungselemente durch eine aushängbare Kulissenführung gebildet sind, wobei erst beim vollständigen Abheben der Verschlussplatte (20) vom Beinschutz (12) die unteren Befestigungselemente vom Beinschutz (12) getrennt werden.

2. Motorroller nach Anspruch 1, **dadurch gekennzeichnet, dass** das Staufach (18) einen Hohlraum (22) umfasst, der sich in das Innere des Beinschutzes (12) hinein erstreckt und der das normale Stauvolumen (V₁) des Staufachs (18) bildet und im verschlossenen Zustand durch die Verschlussplatte (20) abgedeckt ist.

3. Motorroller nach einem der vorhergehenden Ansprüche, **dadurch gekennzeichnet, dass** das untere flexible Element (36) am unteren Rand (24) der Verschlussplatte (20) angebracht und mit dem Beinschutz (12), insbesondere im Bereich eines unteren Abschnitts (38) des Randes einer Staufachöffnung (34), und mit den seitlichen flexiblen Elementen (30) verbunden ist.

4. Motorroller nach einem der vorhergehenden Ansprüche, **dadurch gekennzeichnet, dass** eine Halterung (50) für die Versschlussplatte (20) vorgesehen ist, an der die Verschlussplatte (20) fixierbar ist, wenn diese komplett vom Beinschutz (12) gelöst ist.

5. Motorroller nach einem der vorhergehenden Ansprüche, **dadurch gekennzeichnet, dass** die Verschlussplatte (20) starr ist.

6. Motorroller nach einem der vorhergehenden Ansprüche, **dadurch gekennzeichnet, dass** die flexiblen Elemente (30, 36) im Wesentlichen aus einem Gewebe bestehen.

7. Motorroller nach einem der vorhergehenden Ansprüche, **dadurch gekennzeichnet, dass** ein flexibles Deckelteil (40) vorgesehen ist, das am oberen Rand (26) der Verschlussplatte (20), an oberen Rändern (44) der seitlichen flexiblen Elemente (30) und/oder an einem oberen Abschnitt (42) des Randes der Staufachöffnung (34) fixierbar ist, um das erweiterte Volumen (V₂) abzudecken.

## Claims

1. Motor scooter (10) with a leg shield (12) which covers a steering column, and with a storage compartment (18) which is integrated into the leg shield (12) and, in the closed state, is closed by way of a closure panel (20) which terminates flush with an outer surface of the leg shield (12), the closure panel (20) having an upper edge (26), a lower edge (24) and two side edges (28), and in each case one lateral flexible element (30) being attached to the side edges (28) of the closure panel (20), which element (30) is connected fixedly to the leg shield (12) in a region which lies below the closure panel (20) in the closed state, and the closure panel (20) being spaced apart at least at its upper edge (26) and its side edges (28) in an open state, with the result that an expanded storage volume (V₂) of the storage compartment (18) is formed between the closure panel (20), the leg shield (12) and the flexible elements (30), it being possible for the closure panel (20) to be folded open as far as a first angle, in order to make a normal volume (V₁) of the storage compartment (18) accessible, and to be folded open as far as a second, greater angle, with the result that a part of the expanded storage volume (V₂) of the storage compartment (18) is available between the closure panel (20), the leg shield (12) and the lateral flexible elements (30), it being possible, in the open state, for the lower edge (24) of the closure panel (20) to be spaced apart completely from the leg shield (12) and to be displaced parallel to the leg shield (12), until the two lateral flexible elements (30) and a lower flexible element (36) are tautened, with the result that the complete expanded storage volume (V₂) is available for use, a closure mechanism (46) being provided, via which the closure panel (20) is connected releasably to the leg shield (12), which closure mechanism (46) comprises lower fastening elements in the region of the lower edge (24) of the closure panel (20), **characterized in that** the lower fastening elements are formed by way of a slotted guide which can be uncoupled, the lower fastening elements being separated from the leg shield (12) only when the closure panel (20) is lifted up completely from the leg shield (12).

2. Motor scooter according to Claim 1, **characterized in that** the storage compartment (18) comprises a cavity (22) which extends into the interior of the leg shield (12), forms the normal storage volume (Vi) of the storage compartment (18), and, in the closed state, is covered by way of the closure panel (20).

3. Motor scooter according to either of the preceding claims, **characterized in that** the lower flexible element (36) is attached to the lower edge (24) of the closure panel (20) and is connected to the leg shield (12), in particular in the region of a lower section (38) of the edge of a storage compartment opening (34), and to the lateral flexible elements (30).

4. Motor scooter according to one of the preceding claims, **characterized in that** a holder (50) for the closure panel (20) is provided, on which holder (50) the closure panel (20) can be fixed when the latter is released completely from the leg shield (12).

5. Motor scooter according to one of the preceding claims, **characterized in that** the closure panel (20) is rigid.

6. Motor scooter according to one of the preceding claims, **characterized in that** the flexible elements (30, 36) consist substantially of a woven fabric.

7. Motor scooter according to one of the preceding claims, **characterized in that** a flexible lid part (40) is provided which can be fixed on the upper edge (26) of the closure panel (20), on upper edges (44) of the lateral flexible elements (30) and/or on an upper section (42) of the edge of the storage compartment opening (34), in order to cover the expanded volume (V₂).

## Revendications

1. Scooter (10) comprenant une protection de jambes (12), recouvrant une colonne de direction, et un compartiment de rangement (18), intégré dans la protection de jambes (12) et étant fermé, à l'état fermé, par une plaque de fermeture (20) se terminant à fleur d'une surface extérieure de la protection de jambes (12), la plaque de fermeture (20) comportant un bord supérieur (26), un bord inférieur (24) et deux bords latéraux (28) et un élément flexible latéral (30) étant fixé sur chacun des bords latéraux (28) de la plaque de fermeture (20) et étant relié de manière fixe à la protection de jambes (12) dans une zone située sous la plaque de fermeture (20) à l'état fermé et la plaque de fermeture (20) étant espacée, à l'état ouvert, de la protection de jambes (12) au moins au niveau de son bord supérieur (26) et de ses bords latéraux (28) de façon à former entre la plaque de fermeture (20), la protection de jambes (12) et les éléments flexibles (30) un volume de rangement étendu (V₂) du compartiment de rangement (18), la plaque de fermeture (20) pouvant être ouverte jusqu'à un premier angle afin de rendre accessible un volume normal (V₁) du compartiment de rangement (18) et pouvant être ouverte jusqu'à un deuxième angle plus grand de sorte qu'une partie du volume de rangement étendu (V₂) du compartiment de rangement (18) soit disponible entre la plaque de fermeture (20), la protection de jambes (12) et les éléments flexibles latéraux (30), le bord inférieur (24) de la plaque de fermeture (20) pouvant être complètement espacé, à l'état ouvert, de la protection de jambes (12) et pouvant être déplacé parallèlement à la protection de jambes (12) jusqu'à raidir les deux éléments flexibles latéraux (30) et un élément flexible inférieur (36) afin que le volume de rangement (V₂) étendu complet soit disponible pour utilisation, un mécanisme de fermeture (46) étant prévu qui relie la plaque de fermeture (20) de façon amovible à la protection de jambes (12) et qui comprend des éléments de fixation inférieurs dans la zone du bord inférieur (24) de la plaque de fermeture (20), **caractérisé en ce que** les éléments de fixation inférieurs sont formés par un guide de coulisse amovible, les éléments de fixation inférieurs étant séparés de la protection de jambes (12) uniquement lorsque la plaque de fermeture (20) est complètement soulevée de la protection de jambes (12).

2. Scooter selon la revendication 1, **caractérisé en ce que** le compartiment de rangement (18) comprend une cavité (22) qui s'étend à l'intérieur de la protection de jambes (12), qui forme le volume de rangement normal (V₁) du compartiment de rangement (18) et qui est recouverte à l'état fermé par la plaque de fermeture (20) .

3. Scooter selon l'une des revendications précédentes, **caractérisé en ce que** l'élément flexible inférieur (36) fixé au bord inférieur (24) de la plaque de fermeture (20), est relié à la protection de jambes (12), notamment au niveau d'une partie inférieure (38) du bord d'une ouverture de compartiment de rangement (34), et est relié aux éléments flexibles latéraux (30) .

4. Scooter selon l'une des revendications précédentes, **caractérisé en ce qu'**un support (50) destiné à la plaque de fermeture (20) est prévu auquel la plaque de fermeture (20) peut être fixée lorsqu'elle est complètement détachée de la protection de jambes (12) .

5. Scooter selon l'une des revendications précédentes, **caractérisé en ce que** la plaque de fermeture (20) est rigide.

6. Scooter selon l'une des revendications précédentes, **caractérisé en ce que** les éléments flexibles (30, 36) sont sensiblement en tissu.

7. Scooter selon l'une des revendications précédentes, **caractérisé en ce qu'**une partie formant couvercle flexible (40) est prévue qui peut être fixée au bord supérieur (26) de la plaque de fermeture (20), aux bords supérieurs (44) des éléments flexibles latéraux (30) et/ou à une portion supérieure (42) du bord de l'ouverture de compartiment de rangement (34) afin de recouvrir le volume étendu (V₂).
